# EUROPEAN PATENT APPLICATION

(11) **EP 3 792 510 A1**
(43) Date of publication of application: **17.03.2021**
(21) Application number: 19197010.2
(22) Date of filing: 12.09.2019
(51) Int. Cl.: F16C 7/02, F16C 9/04

(54) **A CONNECTING ROD**

(71) Applicant: Gomecsys B.V., 1411 AR Naarden (NL)
(72) Inventor: De Gooijer, Lambertus Hendrik, 1401 EP Bussum (NL)
(74) Representative: De Vries & Metman

(57) **Abstract**

A connecting rod (1) comprises a rod body (5) and a big end cover (6) which is mounted to the rod body (5) so as to form a divided big end (3) having a cylindrical inner circumference and having a plane of division where the rod body (5) and the big end cover (6) contact each other at contact regions (7) which are located at opposite sides of the cylindrical inner circumference in radial direction thereof. The rod body (5) and the big end cover (6) are fixed to each other at the contact regions (7) by respective fixing members (8). Each fixing member (8) has a bar including opposite thickened end portions (8a, 8b), which thickened end portions (8a, 8b) fit in complementary recesses (12) in an outer circumference of the big end (3) at either side of the plane of division.

## Description

The present invention relates to a connecting rod, comprising a rod body and a big end cover which is mounted to the rod body so as to form a divided big end having a cylindrical inner circumference and a plane of division where the rod body and the big end cover contact each other at contact regions which are located at opposite sides of the cylindrical inner circumference in radial direction thereof, wherein the rod body and the big end cover are fixed to each other at the contact regions by respective fixing members.

A connecting rod including a divided big end is widely known in the field of internal combustion engines. The known connecting rod has a small end which is pivotally connected to a piston and a big end which is pivotally connected to the crankpin of a crankshaft. Usually, the rod body and the big end cover are fixed to each other through respective bolts. A disadvantage of the known connecting rod is that the bolts cause relatively large projections at the big end.

An object of the invention is to provide a compact connecting rod.

This object is accomplished with the connecting rod according to the invention, wherein each fixing member has a bar including opposite thickened end portions, which thickened end portions fit in complementary recesses in an outer circumference of the big end at either side of the plane of division. Since the thickened end portions lie at a distance from each other they keep portions of the big end between the thickened end portions at the plane of division to each other. The thickened end portions are inserted into the recesses in a direction from the outer circumference to the cylindrical inner circumference such that outwardly directed projections at the big end can be minimized, hence providing a compact connecting rod. It is noted that the outer circumference surrounds the cylindrical inner circumference, but it is not necessarily cylindrical or partly cylindrical.

In a preferred embodiment the thickened end portions have respective supporting surfaces facing each other and diverging with respect to each other in a direction from the outer to the inner circumference of the big end, wherein the recesses have bearing surfaces for supporting the respective supporting surfaces which bearing surfaces diverge with respect to each other in a direction from the outer to the inner circumference of the big end, wherein the supporting surfaces and the bearing surfaces are adapted such that the thickened end portions can be inserted slidably into the recesses, since the diverging shapes force the rod body and the big end cover to each other upon inserting the thickened end portions into the recesses. During moving the thickened end portions into the corresponding recesses the fixing member will be tensioned in its longitudinal direction due to stretch thereof.

The outer circumference may be provided with a cavity between the recesses for receiving at least a portion of the bar between its thickened end portions. This can further minimize outwardly directed projections at the big end. The cavity forms a common space of adjacent recesses of the rod body and the big end cover.

In a practical embodiment the fixing member has an I-shape. The I-shape may be mirror symmetrical in a longitudinal direction and a transversal direction thereof.

In a particular embodiment the fixing member comprises a central portion between the thickened end portions, wherein at each thickened end portion the supporting surface has two supporting surface regions located at either side of the central portion in axial direction of the cylindrical inner circumference of the big end.

The big end may have a hole behind at least one of the thickened end portions at a side thereof which is directed to the inner circumference, which hole has an opening to the outer circumference for allowing a tool to be inserted via the opening into the hole so as to be able to lift the at least one of the thickened end portions from its corresponding recess. This provides the opportunity to easily disassemble the connecting rod by removing the thickened end portions from their recesses and dividing the rod body and the big end cover from each other.

In a preferred embodiment the hole is elongated and extends tangentially relative to the cylindrical inner circumference. This allows to introduce a pin-shaped lifting tool through the opening into the hole.

The hole may be tapered such that it narrows in a direction away from the opening. This allows to introduce a tapered pin-shaped lifting tool into the hole which facilitates to lift the corresponding thickened end portion.

The hole may extend behind both thickened end portions such that both thickened end portions can be lifted simultaneously.

In a particular embodiment the opening forms part of a depressed region adjacent to the at least one thickened end portion which depressed region extends in circumferential direction of the big end in which depressed region a centre of the outer circumference as seen in axial direction of the big end is carved-out allowing a pin-shaped lifting tool to be inserted via the depressed portion into the hole. The depressed region results in a low-weight connecting rod and facilitates access to the opening of the hole behind the thickened end portion.

A locking element may be mounted to the big end for locking the fixing member in outward direction of the big end. This guarantees the fixing member to be hold in the connecting rod.

In a specific embodiment the big end is provided with opposite grooves for slidably receiving the locking element at an outer side of the fixing member as seen from the cylindrical inner circumference, which grooves extend tangentially with respect to the inner circumference of the big end.

The invention will hereafter be elucidated with reference to very schematic drawings showing embodiments of the invention by way of example.
Fig. 1 is a perspective view of an embodiment of a connecting rod according to the invention.
Fig. 2 is a similar view as Fig. 1, but showing an opposite side of the connecting rod.
Fig. 3 is a perspective exploded view of a part of the embodiment as shown in Fig. 1 on a larger scale.
Fig. 4 is a similar view as Fig. 1, showing a way of disassembling the connecting rod.
Fig. 5 is a sectional view of the embodiment as shown in Fig. 4.
Fig. 6 is a perspective view of a part of an alternative embodiment of the connecting rod according to the invention.
Fig. 7 is a perspective exploded view of the embodiment as shown in Fig. 6.

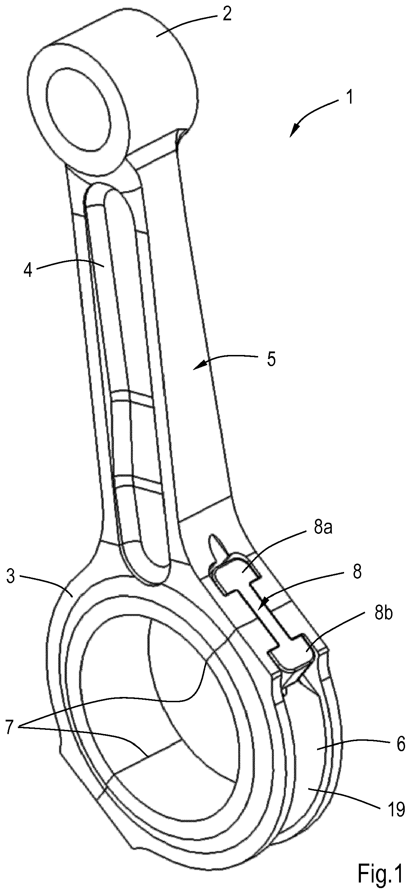

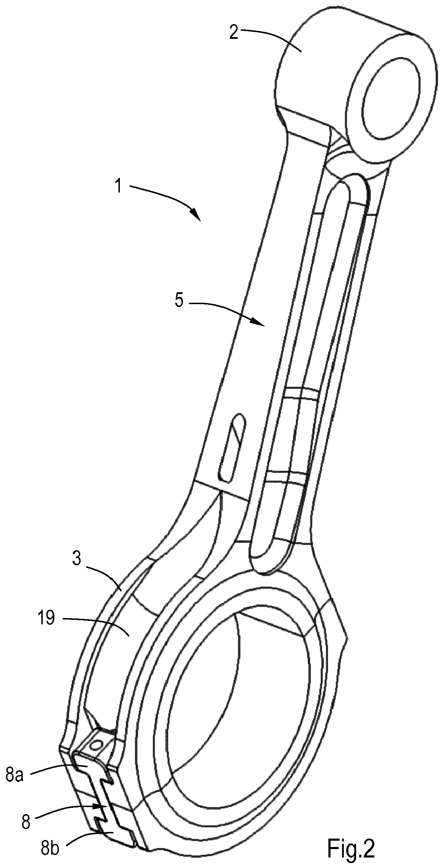

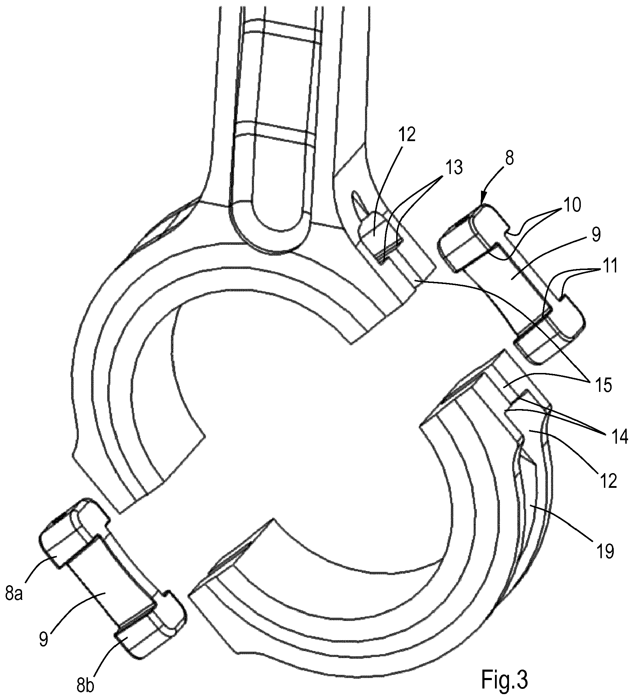

Figs. 1-5 show an embodiment of a connecting rod 1 according to the invention. The connecting rod 1 can be applied in an internal combustion engine, but alternative applications are conceivable. The connecting rod 1 has a small end 2, to which a piston can be mounted through a piston pin, and a big end 3, which can be mounted on a crankpin of a crankshaft. The big end 3 and the small end 2 are connected to each other through a stem 4. The connecting rod 1 has a rod body 5, which is formed by the small end 2, the stem 4 and a part of the big end 3, and a big end cover 6 which is mounted to the rod body 5. This means that the connecting rod 1 has a divided big end 3 which has an outer circumference and a cylindrical inner circumference.

The big end 3 is divided at a plane of division. In practice, the division may be performed by way of a fracture separation process, for example. At the plane of division the rod body 5 and the big end cover 6 contact each other at two contact regions 7 which are located at opposite sides of the cylindrical inner circumference in radial direction thereof. In the embodiment as shown in Figs. 1-5 the plane of division is not perpendicular with respect to a plane in which the centrelines of the inner circumference of the big end 3 and an inner circumference of the small end 2 lie.

The rod body 5 and the big end cover 6 are fixed to each other at the contact regions 7 by respective fixing members 8. Each of the fixing members 8 comprises a bar including opposite thickened end portions 8a, 8b. In the embodiment as shown in Figs. 1-5 the fixing member 8 has an I-shape, comprising a central portion 9 between the thickened end portions 8a, 8b. Each of the thickened end portions 8a, 8b has a supporting surface which is divided in a pair of supporting surface regions 10, 11. The supporting surface regions 10, 11 of each pair are located at either side of the central portion 9 in axial direction of the cylindrical inner circumference of the big end 3. The supporting surface regions 10 of one of the thickened end portions 8a are directed to the supporting surface regions 11 of the other one of the thickened end portions 8b. Furthermore, the supporting surface regions 10 of one of the thickened end portions 8a diverge with respect to the supporting surface regions 11 of the other one of the thickened end portions 8b in a direction from the outer to the inner circumference of the big end 3.

The thickened end portions 8a, 8b of each fixing member 8 fit in complementary recesses 12 in the outer circumference of the big end 3 at either side of the plane of division. Each of the recesses 12 has a bearing surface divided in a pair of bearing surface regions 13, 14 which cooperate with the respective supporting surface regions 10, 11 of the fixing member 8. The bearing surface regions 13, 14 support the respective supporting surface regions 10, 11 and therefore the bearing surface regions 13 of one of the recesses 12 diverge with respect to the bearing surface regions 14 of the other one of the recesses 12 in a direction from the outer to the inner circumference of the big end 3. The supporting surface regions 10, 11 and the bearing surface regions 13, 14 are adapted such that the end portions 8a, 8b can be slidably inserted into the recesses 12 when the rod body 5 and the big end cover 6 contact each other. Due to the diverging shapes of the supporting surface regions 10, 11 and the bearing surface regions 13, 14 the big end cover 6 and the rod body 5 are pressed to each other upon displacing the thickened end portions 8a, 8b of the fixing member 8 in the corresponding recesses 12 in a direction from the outer circumference to the inner circumference of the big end 3. The outer circumference of the big end 3 is provided with a cavity 15 between each pair of recesses 12 for receiving the central portion 9 of the fixing member 8. During inserting the fixing member 8 into the recesses 12 and the cavity 15 the central portion 9 will be tensioned due to stretching, resulting in a clamping force between the rod body 5 and the big end cover 6.

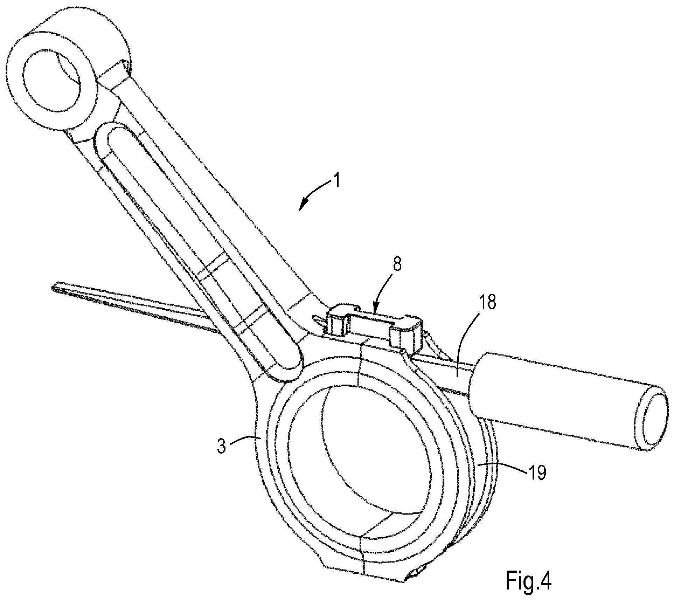

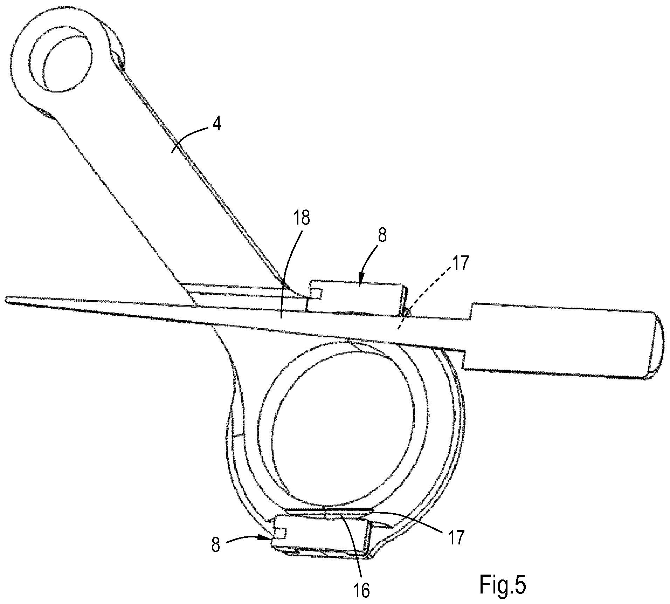

Figs. 4 and 5 illustrate a way of disassembling the connecting rod 1 by removing the fixing members 8. This possibility is created by an elongated tapered hole 16 which is located behind each of the fixing members 8, i.e. between the fixing member 8 and the inner circumference of the big end 3 when the connecting rod 1 is in assembled condition, see Fig. 5. The hole 16 extends tangentially with respect to the cylindrical inner circumference. The hole 16 has an opening 17 to the outer circumference of the big end 3 next to one of the thickened end portions 8a, 8b of each fixing member 8 in circumferential direction of the big end 3. The hole 16 is tapered such that it narrows in a direction away from the opening 17. This provides the opportunity to insert a tapered pin-shaped lifting tool 18 into the hole 16 via the opening 17 as illustrated in Figs. 4 and 5. Upon moving the lifting tool 18 through the hole 16 the fixing member 8 is lifted out of the recesses 12 and the cavity 15 such that it can be removed.

The openings 17 form part of a depressed region 19 between the fixing members 8 which extends in circumferential direction of the big end 3 in which depressed region 19 a centre of the outer circumference as seen in axial direction of the big end 3 is carved-out. The depressed region 19 facilitates the tapered pin-shaped lifting tool 18 to be inserted into the hole 16.

Fig. 5 shows that one of the holes 16 is extended through the stem 4 in order to allow the lifting tool 18 to pass so as to be able to remove both thickened end portions 8a, 8b from their corresponding recesses 12.

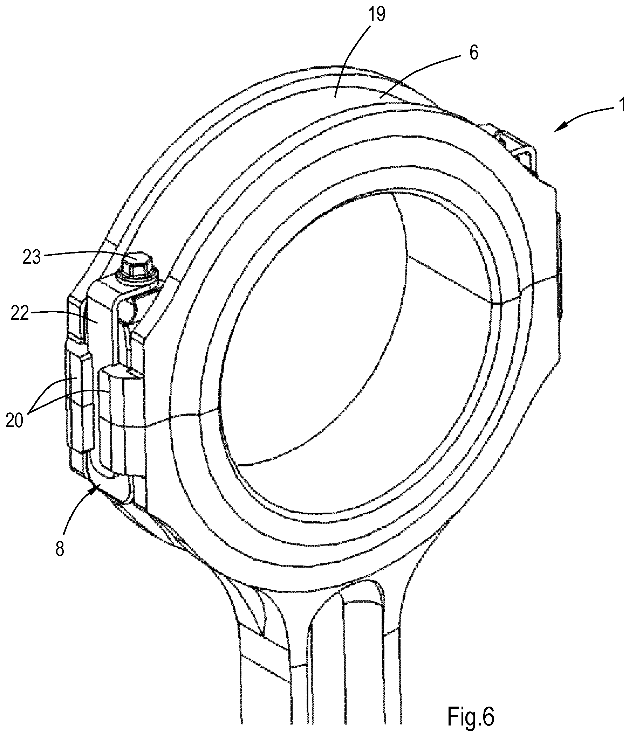

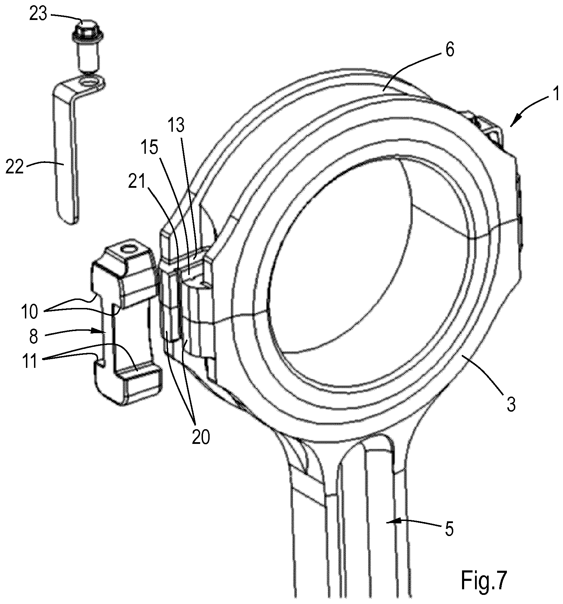

Figs. 6 and 7 show an alternative embodiment. In this case the plane of division is perpendicular with respect to the plane in which the centrelines of the inner circumferences of the big end 3 and the small end 2 lie. Parts which are similar to parts in the embodiment as shown in Figs. 1-5 have the same reference numbers in Figs. 6 and 7. The big end 3 has outwardly directed projections 20 at the plane of division, in which projections 20 respective grooves 21 are provided for receiving a locking plate 22. After inserting a fixing member 8 in the corresponding recesses 12 and cavity 15 the locking plate 22 can be slid into the grooves 21 and attached to the fixing member 8 by a bolt 23. This locks the fixing member 8 with respect to the big end 3 in outward direction thereof.

The invention is not limited to the embodiments shown in the drawings and described hereinbefore, which may be varied in different manners within the scope of the claims and their technical equivalents.

For example, the way of fixing by means of the fixing members as described above is not limited to a big end of a connecting rod, but can also be applied to fix cylindrical or partly cylindrical segments to each other in order to form a divided assembly. In general terms the invention is also related to the following aspect:
A divided assembly including a cylindrical inner circumference having a first member and a second member which are mounted to each other, wherein the divided assembly has a plane of division where the first and second members contact each other at contact regions which are located at opposite sides of the cylindrical inner circumference in radial direction thereof, wherein the first and second members are fixed to each other at the contact regions by respective fixing members, wherein each fixing member has a bar including opposite thickened end portions, which thickened end portions fit in complementary recesses in an outer circumference of the assembly at either side of the plane of division, wherein the thickened end portions have respective supporting surfaces facing each other and diverging with respect to each other in a direction from the outer to the inner circumference of the assembly, wherein the recesses have bearing surfaces for supporting the respective supporting surfaces which bearing surfaces diverge with respect to each other in a direction from the outer to the inner circumference of the assembly, wherein the supporting surfaces and the bearing surfaces are adapted such that the end portions can be inserted slidably into the recesses.

The assembly may further be provided with the features as defined in claims 3-12, wherein the term big end may be replaced by the assembly as indicated hereinbefore.

## Claims

1. A connecting rod (1), comprising a rod body (5) and a big end cover (6) which is mounted to the rod body (5) so as to form a divided big end (3) having a cylindrical inner circumference and having a plane of division where the rod body (5) and the big end cover (6) contact each other at contact regions (7) which are located at opposite sides of the cylindrical inner circumference in radial direction thereof, wherein the rod body (5) and the big end cover (6) are fixed to each other at the contact regions (7) by respective fixing members (8), **characterized in that,** each fixing member (8) has a bar including opposite thickened end portions (8a, 8b), which thickened end portions (8a, 8b) fit in complementary recesses (12) in an outer circumference of the big end (3) at either side of the plane of division.

2. A connecting rod (1) according to claim 1, wherein the thickened end portions (8a, 8b) have respective supporting surfaces (10, 11) facing each other and diverging with respect to each other in a direction from the outer to the inner circumference of the big end (3), wherein the recesses (12) have bearing surfaces (13, 14) for supporting the respective supporting surfaces (10, 11) which bearing surfaces (13, 14) diverge with respect to each other in a direction from the outer to the inner circumference of the big end (3), wherein the supporting surfaces (10, 11) and the bearing surfaces (13, 14) are adapted such that the thickened end portions (8a, 8b) can be inserted slidably into the recesses (12).

3. A connecting rod (1) according to claim 1 or 2, wherein the outer circumference is provided with a cavity (15) between the recesses (12) for receiving at least a portion of the bar between its thickened end portions (8a, 8b).

4. A connecting rod (1) according to any one of the preceding claims, wherein the fixing member (8) has an I-shape.

5. A connecting rod (1) according to claims 2, 3 and 4, wherein the fixing member (8) comprises a central portion (9) between the thickened end portions (8a, 8b), wherein at each thickened end portion (8a, 8b) the supporting surface has two supporting surface regions (10, 11) located at either side of the central portion (9) in axial direction of the cylindrical inner circumference of the big end (3).

6. A connecting rod (1) according to any one of the preceding claims, wherein the big end (3) has a hole (16) behind at least one of the thickened end portions (8a, 8b) at a side thereof which is directed to the inner circumference, which hole (16) has an opening (17) to the outer circumference for allowing a lifting tool (18) to be inserted via the opening (17) into the hole (16) so as to be able to lift the at least one of the thickened end portions (8a, 8b) from its corresponding recess (12).

7. A connecting rod (1) according to claim 6, wherein the hole (16) is elongated and extends tangentially relative to the cylindrical inner circumference.

8. A connecting rod (1) according to claim 7, wherein the hole (16) is tapered such that it narrows in a direction away from the opening (17).

9. A connecting rod (1) according to any one of the claims 6-8, wherein the hole (16) extends behind both thickened end portions (8a, 8b).

10. A connecting rod (1) according to any one of the claims 6-9, wherein the opening (17) forms part of a depressed region (19) adjacent to the at least one thickened end portion (8a, 8b) which depressed region (19) extends in circumferential direction of the big end (3) in which depressed region (19) a centre of the outer circumference as seen in axial direction of the big end (3) is carved-out allowing a pin-shaped lifting tool (18) to be inserted via the depressed region (19) into the hole (16).

11. A connecting rod (1) according to any one of the preceding claims, wherein a locking element (22) is mounted to the big end (3) for locking the fixing member (8) in outward direction of the big end (3).

12. A connecting rod (1) according to claim 11, wherein the big end (3) is provided with opposite grooves (21) for slidably receiving the locking element (22) at an outer side of the fixing member (8) as seen from the cylindrical inner circumference, which grooves (21) extend tangentially with respect to the inner circumference of the big end (3).
